# EUROPEAN PATENT SPECIFICATION

(11) **EP 2 161 306 B1**
(45) Date of publication and mention of the grant of the patent: **07.09.2011**
(21) Application number: 08015807.4
(22) Date of filing: 09.09.2008
(51) Int. Cl.: C08L 95/00

(54) **Use of polyesters as bituminous binders in road construction**
Verwendung von Polyestern als Bitumenbinder beim Straßenbau
Utilisation de polyesters en tant que liaisons bitumineuses dans la construction des routes

(43) Date of publication of application: 10.03.2010
(73) Proprietor: Cognis IP Management GmbH, 40589 Düsseldorf (DE)
(72) Inventor: Bigorra Llosas, Joaquin, 08201 Sabadell (ES); Valls, Ramon, 08022 Barcelona (ES)
(74) Representative: Fabry, Bernd

(56) References cited:
- FR-A- 2 768 150
- US-A- 3 360 490
- DATABASE WPI Week 198323 Thomson Scientific, London, GB; AN 1983-55686K XP002512856 & SU 945 167 B (POLYMER CONS MAT) 23 July 1982 (1982-07-23)

## Description

### Field of the invention

The present invention is related to the area of road construction and concerns the use of special polyesters as binders for bituminous compositions.

### Background of the invention

Bituminous binders are used in particular in road construction industry in order to provide the bonding between the aggregates or between the substrate and the aggregates. Various possibilities are distinguished in this respect:
(i) The bituminous binder is mixed in the heat with aggregates. The products are called a hot bituminous mixes, the bituminous binder providing the bonding between the aggregates;
(ii) The bituminous binder is spread at elevated temperatures over the substrate and then the aggregates are spread over this bituminous layer, providing adhesion to the substrate. The products are called anhydrous binder surfacings;
(iii) The bituminous binder is mixed in the cold with the aggregates. The products are called cold bituminous mixes produced with an aqueous bituminous product emulsion;
(iv) Finally, the bituminous binder is spread at low temperatures. The products are called surfacings produced with the aqueous bituminous binder emulsion.

When these mixes are prepared or these spreading operations are carried out, it is always necessary for the consistency of the binder to be such that it allows good wetting of the aggregates and for the consistency of the binder subsequently to change in order for the bituminous mixes or the surfacings thus produced to acquire mechanical performances which render them suitable for their road construction use. A more fluid initial consistency of the binder is obtained either by heating the bituminous binder, or by thinning or fluxing (these two terms denote the same operation, the choice of one or other usually being a function of the nature of the additive), by introducing a solvent or fluxing oil of petroleum or carbon chemistry origin, or by aqueous emulsification of the bituminous binder, or by a combination of the above methods.

The solvents currently used are of petroleum or carbon chemistry origin. After the application of the binder, they evaporate in order to allow the latter to recover its high consistency. The solvents, thus gradually dispersed into the atmosphere, pollute the latter, contaminate aerobic organisms and contribute to the greenhouse effect. Furthermore, they generally comprise polycyclic aromatic compounds, at least some of which are recognized as mutagenic. The use of these solvents contributes to the exhaustion of fossil fuel resources. The presence of the above mentioned solvents also poses safety problems, because they greatly lower the ignition point and requires strict measures for protection against fire on storage and during transportation. French patent application FR 2768150 A1 (Saada) suggests to use unsaturated fatty acid methyl esters as thinner components. These compounds, however, have been found to exhibit unsatisfying rheological behaviour during the curing process.

Therefore, the problem underlying the present invention has been to overcome the disadvantages of the state of the art cited above. In particular, the aim has been to develop new bituminous binders for road construction with improved environmental and safety properties without affecting their performance when used in road construction.

### Detailed description of the invention

The present invention refers to the use of polyesters obtained from the condensation of
(i) unsaturated monocarboxylic acids,
(ii) di- and/or polycarboxylic acids, and
(iii) polyols
as auxiliary agents for asphalt and bitumen compositions.

Surprisingly it has been observed that polyesters obtained from polyols and a blend of unsaturated monocarboxylic acids and di- and/or polycarboxylic acids, more particularly esters of trimethylolpropane, adipic acid and unsaturated fatty acids show superior behaviour as binders in road construction when compared with other binders known from state of the art and found in the market. In particular, the products are environmental friendly, low toxic, do not alter the ignition temperature of the composition and exhibit an improved hardening behaviour when used in road construction.

### Asphalt and bitumen

In the following, the terms asphalt and bitumen are used to describe natural or petroleum-derived bitumen including the well-known penetration grade bitumen, blown or oxidised grades and polymer-modified bitumen, for example, modified with styrene-butadiene polymers or ethylene vinyl acetate polymers. Examples are those having a softening point (Ring and Ball) from 20, preferably from about 50 to about 200 °C. Also preferred are those starting materials exhibiting a penetration Index (UNE-EN 1426) at 25 °C between about 30 and about 330.

### Polyesters

The polyesters according to the present invention may be obtained by condensation of blends of unsaturated monocarboxylic acids and di- and/or polycarboxylic acids on one hand and polyols on the other, usually in the presence of acidic catalysts, like e.g. p-toluene sulphonic acid. Typically, the polyesters are added in amounts of about 0.15 to 15, preferably 0.5 to 8 % b.w. calculated on the final asphalt or bitumen emulsion. The condensation of the acid component and the polyol component can take place according to standard methods of organic chemistry which are well known from the art. In particular, it is desirous to use an over-stoichiometric excess of one of the compounds - usually the fatty acid - and to separate the water of condensation continuously in order to shift the equilibrium of the reaction towards the condensation products. Subsequently, non-reacted starting material is separated from the final polyester for example by distillation at elevated temperatures and/or reduced pressure. In the following the types of starting materials are described in more detail:

### Unsaturated monocarboxylic acids

The polyesters according to the present invention may be derived from unsaturated monocarboxylic acids (compound i) according to general formula (**I**),

R¹CO-OH (I)

in which R¹CO stands for a linear or branched acyl radical having 16 to 56, preferably 18 to 22 carbon atoms and 1 to 3 double bonds. Typical examples are palmitoleic acid, oleic acid, elaidic acid, petroselic acid, linoleic acid, linolenic acid, elaeostearic acid, gadoleic acid, and erucic acid and the technical mixtures thereof obtained, for example, in the pressure hydrolysis of natural fats and oils, in the reduction of aldehydes from Roelen's oxosynthesis or in the dimerization of unsaturated fatty acids. In case technical fatty acids are used, these raw materials may also contain saturated species, unless the iodine value of the technical grade fatty acid is above 90, preferably above 100 and more preferably above 150. Typical examples are fatty acid mixtures obtained from olives, sunflower, soy, rape seed or line seed.

### Dicarboxylic acids

The polyesters according to the present invention may be derived from di- and/or polycarboxylic acids (compound ii) according to general formula **(II),**

HOOC-[X]-COOH (II)

in which [X] stands for an optionally hydroxysubstituted alk(en)ylene group having 1 to 10, preferably 1 to 4 carbon atoms. Typical examples are succinic acid, maleic acid, glutaric acid, 1,12-dodecanedioic acid and, in particular, adipic acid. As far as polycarboxylic acids are concerned a typical example is citric acid. The relation between mono- and di/polycarboxylic acid can show wide ranges. It is possible to use the two components in molar ratios of 10:90, to 90:10, preferably 25:75 to 75:25. Most preferred is a relation of about 50:50.

### Polyols

Suitable polyols (component iii) preferably contain 2 to 15 carbon atoms and at least two hydroxyl groups. The polyols may contain other functional groups, more especially amino groups, or may be modified with nitrogen. Typical examples are
o glycerol;
o alkylene glycols such as, for example, ethylene glycol, diethylene glycol, propylene glycol, butylene glycol, hexylene glycol and polyethylene glycols with an average molecular weight of 100 to 1000 Dalton;
o technical oligoglycerol mixtures with a degree of self-condensation of 1.5 to 10, such as for example technical diglycerol mixtures with a diglycerol content of 40 to 50% by weight;
o methylol compounds such as, in particular, trimethylol ethane, trimethylol propane, trimethylol butane, pentaerythritol and dipentaerythritol;
o lower alkyl glucosides, particularly those containing 1 to 8 carbon atoms in the alkyl group, for example methyl and butyl glucoside;
o sugar alcohols containing 5 to 12 carbon atoms, for example sorbitol or mannitol,
o sugars containing 5 to 12 carbon atoms, for example glucose or sucrose;
o amino sugars, for example glucamine;
o dialcoholamines, such as diethanolamine or 2-aminopropane-1,3-diol.

The preferred polyols are trimethylolpropane and pentaerythrit. The relation between the acidic compound and the polyol can be selected between wide ranges. Typically one will install a molar ratio of 0.5 to 0.8 acid groups for each hydroxyl group in the polyol.

### Industrial application

Another object of the present invention refers of a composition for road construction, comprising:
(a) Asphalt or bitumen;
(b) Polyesters as described above; and optionally
(c) non-ionic, cationic and/or amphoteric co-emulsifiers;
(d) Solvents; and/or
(e) Polymerisation catalysts.

More particular the emulsions comprise
(a) about 10 to about 70, preferably about 20 to about 40 % b.w. asphalt or bitumen;
(b) about 0.15 to about 15, preferably about 0.2 to about 3 % b.w. polyesters;
(c) 0 to about 5, preferably about 1 to about 4 % b.w. non-ionic, cationic and/or amphoteric co-emulsifiers; and/or
(d) 0 to about 40, preferably about 5 to about 30 % b.w. solvents;
(e) 0 to about 1, preferably about 0.5 % b.w. polymerisation catalysts
under the condition that the amounts add with water and optionally additional typical auxiliary agents to 100 % b.w.

### Co-Binders

In another embodiment of the present invention it has been found advantageous to use the polyesters in combination with non-ionic, cationic or amphoteric co-binders or co-emulsifiers (component c) in order to improve the rheological behaviour during the mixing process. Most preferred is the use of non-ionic emulsifiers like for example alkyl polyglucosides or fatty alcohol alkoxylates or amphoteric co-emulsifiers of the betaine type, like for example alkyl betaines, alkylamido betaines, imidazolins and amphoglycinates.

### Solvents

It is advisable to use non-polar solvents in hot bitumen asphalt or to obtain a better emulsion, with less viscosity and better stability. This optional component (d) may be selected, for example, from mineral oils, hydrocarbons, fatty acid lower alkyl esters such as, for example, the lower alkyl (C₁-C₄) esters, i.e. methyl, ethyl, propyl and/or butyl esters, of caproic acid, caprylic acid, 2-ethylhexanoic acid, capric acid, lauric acid, isotridecanoic acid, myristic acid, palmitic acid, palmitoleic acid, stearic acid, isostearic acid, oleic acid, elaidic acid, petroselic acid, linoleic acid, linolenic acid, elaeostearic acid, arachic acid, gadoleic acid, behenic acid and erucic acid and technical mixtures thereof. Vegetable triglycerides, for example coconut oil, palm oil, palm kernel oil, sunflower oil, olive oil and the like are also suitable.

### Polymerisation catalysts

In order to improve the hardening behaviour of the asphalt or bituminous compositions it has been found to add polymerisation catalysts. Typical examples are transition metal salts of carboxylic acids, such as cobalt, manganese, nickel, iron or copper salts of C₆-C₂₂ carboxylate. The preferred catalyst is cobalt octanoate.

### Examples

### Manufacturing example M1

### Polyolester of line seed acid and adipic acid

210 g (0.755 M) line seed fatty acid, 144 g (1.07 M), trimethylol propane, 79 g (0.54 M) adipic acid and 1 g of the catalyst p-toluene sulphonic acid were mixed and heated at 180 to 200 °C. Once the final temperature was reached the reaction was controlled by the acid value. The mixture was cooled down and the reaction terminated after the acid value reached < 10 mg KOH /g.

### Example 1, Comparative Examples C1 and C2

Samples of the comparative binders C1 and C2 as well as a binder according to manufacturing example M1 all made with Bitumen 70/100 were spread as 1 mm layers and stored at a temperature of 50 °C. The ring-and-ball softening point was measured according to French Standard NF T66-008, for each layer, after 3, 7, 14 and 31 days. The results are given in Table 1.

**Table 1**

| **Ring-and-ball softening points** | | | |
|---|---|---|---|
| **Composition** | **C1** | **C2** | **1** |
| Bitumen 70/100 | 93.0 | 93.0 | 93.0 |
| Rapeseed oil methyl ester | 5.0 | 6.8 | 5.0 |
| Polymer acc. Example M1 | - | - | 1.8 |
| Cobalt octanoate | 0.2 | 0.2 | 0.2 |
| Vegetable oil | 1.8 | - | - |

| ***Ring-and-ball softening point [°C] (R& Ball for Bitumen 100 % 48.5 °C)*** | | | |
|---|---|---|---|
| Initial | 34 | 29 | 34 |
| 8 days | 37 | 37 | 41 |
| 15 days | 38 | 38 | 43 |

As one can see the compositions according to the present invention exhibit superior hardening properties compared to similar compositions based on conventional flux vegetable oils - unsaturated methyl esters mixtures (C1) or unsaturated fatty acid methyl esters (C2).

## Claims

1. Use of polyesters obtained from the condensation of
(i) unsaturated monocarboxylic acids,
(ii) di- and/or polycarboxylic acids, and
(iii) polyols
as auxiliary agents for asphalt and bitumen compositions.

2. Use according to Claim 1, **characterised in that** said polyesters are derived from unsaturated monocarboxylic acids according to general formula **(I),**
R¹CO-OH (I)
in which R¹CO stands for a linear or branched acyl radical having 16 to 56 carbon atoms and 1 to 3 double bonds.

3. Use according to Claims 1 and/or 2, **characterised in that** said polyesters are derived from dicarboxylic acids according to general formula (**II**),
HOOC-[X]-COOH (II)
in which [X] stands for an optionally hydroxysubstituted alk(en)ylene group having 1 to 10 carbon atoms.

4. Use according to any of the preceding Claims 1 to 3, **characterised in that** said polyesters are derived from polyols selected from the group consisting of glycerol, alkylene glycols, technical oligoglycerol mixtures with a degree of self-condensation of 1.5 to 10, methylol compounds, lower alkyl glucosides, sugar alcohols containing 5 to 12 carbon atoms, sugars containing 5 to 12 carbon atoms, amino sugars and dialcoholamines.

5. Use according to any of the preceding Claims 1 to 4, **characterised in that** said auxiliary agent is a binder, fluxant, and/or viscosity reducer.

6. Aqueous compositions for road construction, comprising
(a) Asphalt or bitumen;
(b) Polyesters obtained from the condensation of unsaturated monocarboxylic acids, di- and/or polycarboxylic acids and polyols; and optionally
(c) Non-ionic, cationic and/or amphoteric co-emulsifiers;
(d) Solvents; and/or
(e) Polymerisation catalysts.

7. Compositions according to Claim 6, **characterised in that** they comprise
(b) 10 to 70 % b.w. asphalt or bitumen;
(b) 0.15 to 15 % b.w. polyesters;
(c) 0 to 5 % b.w. non-ionic, cationic and/or amphoteric co-emulsifiers; and/or
(d) 0 to 40 % b.w. solvents;
(e) 0 to 1 % b.w. polymerisation catalysts
under the condition that the amounts add with water and optionally additional typical auxiliary agents to 100 % b.w.

8. Compositions according to Claims 6 and/or 7, **characterised in that** they comprise as co-binders (component c), amphoteric surfactants of the betaine or imidazoline type.

9. Compositions according to any of the preceding Claims 6 to 8, **characterised in that** they comprise solvents (component d) selected from the group consisting of mineral oils, hydrocarbons, fatty acid lower alkyl esters and vegetable triglycerides.

10. Compositions according to any of the preceding Claims 6 to 8, **characterised in that** they comprise polymerisation catalysts (component e) selected from the group consisting of transition metal salts of carboxylic acids.

## Patentansprüche

1. Verwendung von aus der Kondensation von
(i) ungesättigten Monocarbonsäuren,
(ii) Di- und/oder Polycarbonsäuren und
(iii) Polyolen
erhaltenen Polyestern als Hilfsmittel für Asphalt- und Bitumenzusammensetzungen.

2. Verwendung nach Anspruch 1, **dadurch gekennzeichnet, daß** sich die Polyester von ungesättigten Monocarbonsäuren der allgemeinen Formel (I),
R¹CO-OH (I)
worin R¹CO für einen linearen oder verzweigten Acylrest mit 16 bis 56 Kohlenstoffatomen und 1 bis 3 Doppelbindungen steht, ableiten.

3. Verwendung nach den Ansprüchen 1 und/oder 2, **dadurch gekennzeichnet, daß** sich die Polyester von Dicarbonsäuren der allgemeinen Formel (II),
HOOC-[X]-COOH (II)
worin [X] für eine gegebenenfalls hydroxysubstituierte Alk(en)ylengruppe mit 1 bis 10 Kohlenstoffatomen steht, ableiten.

4. Verwendung nach einem der Ansprüche 1 bis 3, **dadurch gekennzeichnet, daß** sich die Polyester von Polyolen aus der Gruppe bestehend aus Glycerin, Alkylenglykolen, technischen Oligoglyceringemischen mit einem Selbstkondensationsgrad von 1,5 bis 10, Methylolverbindungen, Niederalkylglucosiden, Zuckeralkoholen mit 5 bis 12 Kohlenstoffatomen, Zuckern mit 5 bis 12 Kohlenstoffatomen, Aminozuckern und Dialkoholaminen ableiten.

5. Verwendung nach einem der Ansprüche 1 bis 4, **dadurch gekennzeichnet, daß** es sich bei dem Hilfsmittel um ein Bindemittel, ein Flußmittel und/oder ein Mittel zur Herabsetzung der Viskosität handelt.

6. Wäßrige Zusammensetzungen für den Straßenbau, umfassend
(a) Asphalt oder Bitumen;
(b) aus der Kondensation von ungesättigten Monocarbonsäuren, Di- und/oder Polycarbonsäuren und Polyolen erhaltene Polyester und gegebenenfalls
(c) nichtionische, kationische und/oder amphotere Coemulgatoren;
(d) Lösungsmittel und/oder
(e) Polymerisationskatalysatoren.

7. Zusammensetzungen nach Anspruch 6, **dadurch gekennzeichnet, daß** sie
(a) 10 bis 70 Gew.-% Asphalt oder Bitumen;
(b) 0,15 bis 15 Gew.-% Polyester;
(c) 0 bis 5 Gew.-% nichtionische, kationische und/oder amphotere Coemulgatoren und/oder
(d) 0 bis 40 Gew.-% Lösungsmittel;
(e) 0 bis 1 Gew.-% Polymerisationskatalysatoren umfassen, unter der Bedingung, daß die Mengen sich mit Wasser und gegebenenfalls zusätzlichen typischen Hilfsmitteln zu 100 Gew.-% summieren.

8. Zusammensetzungen nach den Ansprüchen 6 und/oder 7, **dadurch gekennzeichnet, daß** sie als Cobindemittel (Komponente c) amphotere Tenside vom Betain- oder Imidazolin-Typ umfassen.

9. Zusammensetzungen nach einem der Ansprüche 6 bis 8, **dadurch gekennzeichnet, daß** sie Lösungsmittel (Komponente d) aus der Gruppe bestehend aus Mineralölen, Kohlenwasserstoffen, Fettsäureniederalkylestern und pflanzlichen Triglyceriden umfassen.

10. Zusammensetzungen nach einem der Ansprüche 6 bis 8, **dadurch gekennzeichnet, daß** sie Polymerisationskatalysatoren (Komponente e) aus der Gruppe bestehend aus Übergangsmetallsalzen von Carbonsäuren umfassen.

## Revendications

1. Utilisation de polyesters obtenus par la condensation de
(i) des acides monocarboxyliques insaturés,
(ii) des acides di- et/ou polycarboxyliques et
(iii) des polyols
en tant qu'agents auxiliaires pour des compositions d'asphalte et de bitume.

2. Utilisation selon la revendication 1, **caractérisée en ce que** lesdits polyesters sont dérivés d'acides monocarboxyliques insaturés de formule générale (I)
R¹CO-OH (I)
dans laquelle R¹CO représente un radical acyle linéaire ou ramifié contenant 16 à 56 atomes de carbone et 1 à 3 doubles liaisons.

3. Utilisation selon la revendication 1 et/ou 2, **caractérisée en ce que** lesdits polyesters sont dérivés d'acides dicarboxyliques de formule générale (II)
HOOC-[X]-COOH (II)
dans laquelle [X] représente un groupe alkylène ou alcénylène éventuellement à substitution hydroxy contenant 1 à 10 atomes de carbone.

4. Utilisation selon l'une quelconque des revendications 1 à 3 précédentes, **caractérisée en ce que** lesdits polyesters sont dérivés de polyols choisis dans le groupe constitué par le glycérol, les alkylène glycols, les mélanges techniques d'oligoglycérol ayant un degré d'auto-condensation de 1,5 à 10, les composés de méthylol, les alkylglycosides inférieurs, les polyols contenant 5 à 12 atomes de carbone, les sucres contenant 5 à 12 atomes de carbone, les sucres aminés et les dialcoolamines.

5. Utilisation selon l'une quelconque des revendications 1 à 4 précédentes, **caractérisée en ce que** ledit agent auxiliaire est un liant, un fluxant et/ou un réducteur de viscosité.

6. Compositions aqueuses pour la construction routière, comprenant
(a) de l'asphalte ou du bitume ;
(b) des polyesters obtenus par la condensation d'acides monocarboxyliques insaturés, d'acides di- et/ou polycarboxyliques et de polyols ; et éventuellement
(c) des co-émulsifiants non ioniques, cationiques et/ou amphotères ;
(d) des solvants ; et/ou
(e) des catalyseurs de polymérisation.

7. Compositions selon la revendication 6, **caractérisées en ce qu'**elles comprennent
(b) 10 à 70 % en poids d'asphalte ou de bitume ;
(b) 0,15 à 15 % en poids de polyesters ;
(c) 0 à 5 % en poids de co-émulsifiants non ioniques, cationiques et/ou amphotères ; et/ou
(d) 0 à 40 % en poids de solvants ;
(e) 0 à 1 % en poids de catalyseurs de polymérisation,
à condition que les quantités s'ajoutent avec l'eau et éventuellement des agents auxiliaires types supplémentaires pour atteindre 100 % en poids.

8. Compositions selon les revendications 6 et/ou 7, **caractérisées en ce qu'**elles comprennent en tant que co-liants (composant c) des tensioactifs amphotères du type bétaïne ou imidazoline.

9. Compositions selon l'une quelconque des revendications 6 à 8 précédentes, **caractérisées en ce qu'**elles comprennent des solvants (composant d) choisis dans le groupe constitué par les huiles minérales, les hydrocarbures, les esters alkyliques inférieurs d'acides gras et les triglycérides végétaux.

10. Compositions selon l'une quelconque des revendications 6 à 8 précédentes, **caractérisées en ce qu'**elles comprennent des catalyseurs de polymérisation (composant e) choisis dans le groupe constitué par les sels de métaux de transition d'acides carboxyliques.
